# EUROPEAN PATENT APPLICATION

(11) **EP 4 579 333 A1**
(43) Date of publication of application: **02.07.2025**
(21) Application number: 24223178.5
(22) Date of filing: 24.12.2024
(51) Int. Cl.: G03B 21/00, G03B 21/14

(54) **PROJECTION CABINET AND PROJECTION SYSTEM**

(30) Priority: 26.12.2023 JP 2023219007
(71) Applicant: Seiko Epson Corporation, Tokyo 160-8801 (JP)
(72) Inventor: KUROTA, Ippei, Suwa-shi, 392-8502 (JP)
(74) Representative: Lewis Silkin LLP

(57) **Abstract**

A projection cabinet includes a cabinet main body as a housing housing a projector that emits a projection light as a projection image to be projected onto a wall surface and having an opening as a first opening through which the projection light passes, a lower assembly as an installation portion disposed in the cabinet main body, in which the projector is installed, and a protrusion as a protruding portion disposed in the cabinet main body and protruding toward a side of the wall surface, wherein the protrusion is brought into contact with the wall surface, and thereby, the projector is positioned in a predetermined position where the projection image is displayed on the wall surface.

## Description

The present application is based on, and claims priority from JP Application Serial Number 2023-219007, filed December 26, 2023, the disclosure of which is hereby incorporated by reference herein in its entirety.

### BACKGROUND

### 1. Technical Field

The present disclosure relates to a projection cabinet and a projection system.

### 2. Related Art

A cabinet described in JP-A-2022-59236 is known as a movable furniture with a projector housed therein.

According to the cabinet described in JP-A-2022-59236, a user can easily set the cabinet in an appropriate projection position.

A lid of the cabinet is used for positioning the cabinet. The user can set the cabinet in the appropriate projection position by opening the lid to protrude with an end of the lid toward a wall side, and then, moving the cabinet to bring the end of the lid into contact with the wall. The appropriate projection position is a position in which a rectangular projection image can be projected onto a screen.

JP-A-2022-59236 is an example of the related art.

When a machining error or an assembly error occurs in the lid used for positioning of the cabinet, the positioning accuracy is lowered, which may cause distortion or image quality degradation in the projection image.

Accordingly, it is desired to further improve the reliability of the positioning accuracy.

### SUMMARY

A projection cabinet according to an aspect of the present disclosure includes a housing housing a projector that emits a light as a projection image to be projected onto a projection surface and having a first opening through which the light passes, an installation portion disposed in the housing, in which the projector is installed, and a protruding portion disposed in the housing and protruding toward a side of the projection surface, wherein the protruding portion is brought into contact with the projection surface, and thereby, the projector is positioned in a predetermined position where the projection image is displayed on the projection surface.

A projection system according to an aspect of the present disclosure is a projection system including a projector emitting a light as a projection image to be projected onto a projection surface, and a projection cabinet housing the projector, wherein the projection cabinet includes a housing having a first opening through which the light passes, an installation portion disposed in the housing, in which the projector is installed, and a protruding portion disposed in the housing and protruding toward a side of the projection surface, and the protruding portion is brought into contact with the projection surface, and thereby, the projector is positioned in a predetermined position where the projection image is displayed on the projection surface.

### BRIEF DESCRIPTION OF THE DRAWINGS

FIG. 1 is a front perspective view showing a schematic configuration and an installation mode of a projection system.
FIG. 2 is a rear perspective view showing the schematic configuration and the installation mode of the projection system.
FIG. 3 is a right side view showing the schematic configuration and the installation mode of the projection system.
FIG. 4 is a top view showing the schematic configuration and the installation mode of the projection system.
FIG. 5A is a table showing screen sizes and dimensions of the projection system.
FIG. 5B is a table showing throw ratios of the projection system.
FIG. 6 is an exploded perspective view of a projection cabinet.
FIG. 7 is an exploded perspective view of a cabinet main body.
FIG. 8 is a front perspective view showing a schematic configuration of the projection cabinet.
FIG. 9 is a rear perspective view showing the schematic configuration of the projection cabinet.
FIG. 10 is an enlarged right side view of a protrusion.
FIG. 11 is a plan view of an operation panel.
FIG. 12 is a block diagram showing a configuration of a controller.
FIG. 13 shows an example of cabling of the projection cabinet.

### DESCRIPTION OF EMBODIMENTS

Embodiments of the present disclosure will now be described with reference to the drawings.

Note that, in the following drawings, elements may be shown at different dimensional scales in order to facilitate visibility of the respective elements.

Hereinafter, for convenience of description, three axes orthogonal to one another are referred to as an X axis, a Y axis, and a Z axis, and a direction parallel to the X axis is also referred to as "X-axis direction", a direction parallel to the Y axis is also referred to as "Y-axis direction", and a direction parallel to the Z axis is also referred to as "Z-axis direction". In addition, a head side in an arrow direction of each axis is also referred to as "plus side", and an opposite side is also referred to as "minus side". Hereinafter, a surface on the minus side in the X-axis direction is referred to as "front surface", a surface on the plus side in the X-axis direction is referred to as "back surface", a surface on the minus side in the Y-axis direction is referred to as "left side surface", a surface on the plus side in the Y-axis direction is referred to as "right side surface", a surface on the plus side in the Z-axis direction is referred to as "upper surface", and a surface on the minus side in the Z-axis direction is referred to as "lower surface".

### 1. Projection System

### 1.1. Schematic Configuration and Installation Mode of Projection System

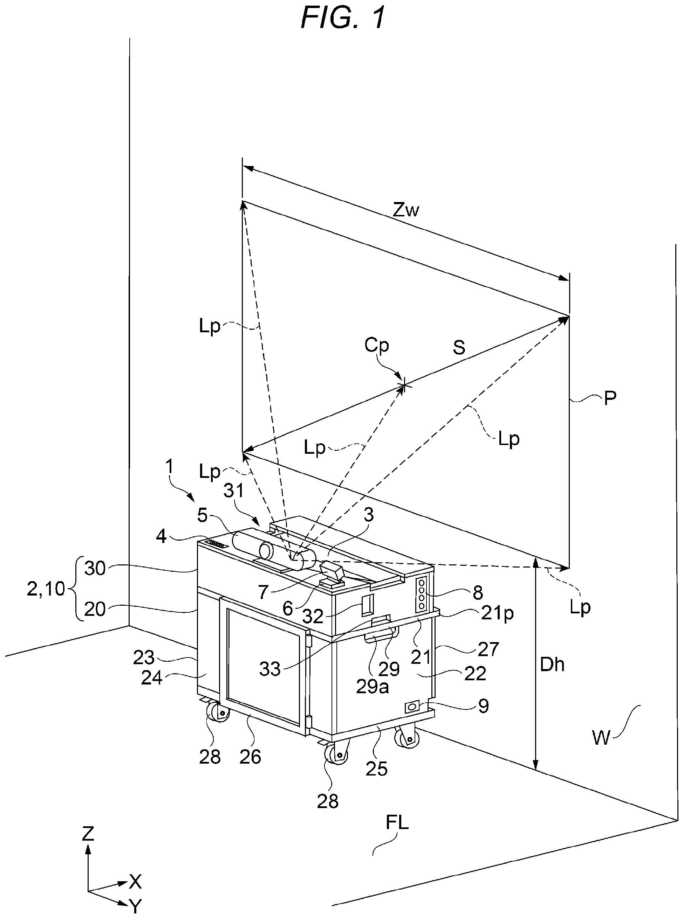

A schematic configuration and an installation mode of a projection system 1 will be described with reference to FIGS. 1 to 4.

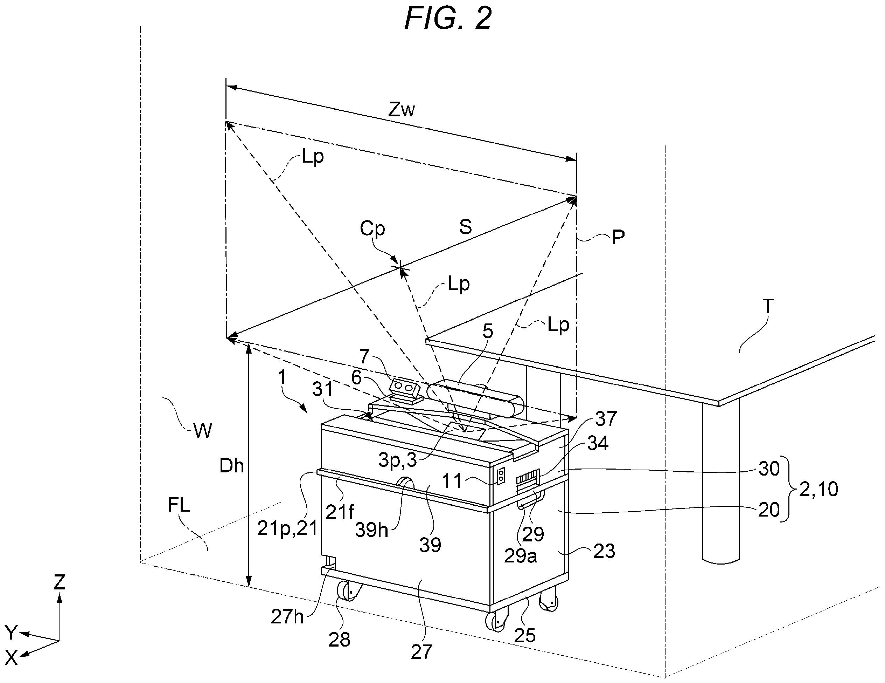

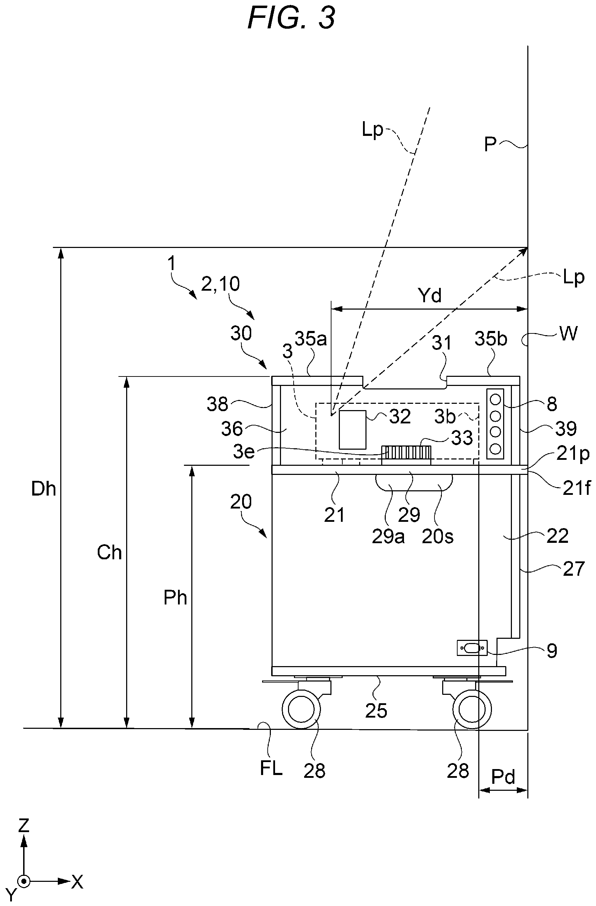

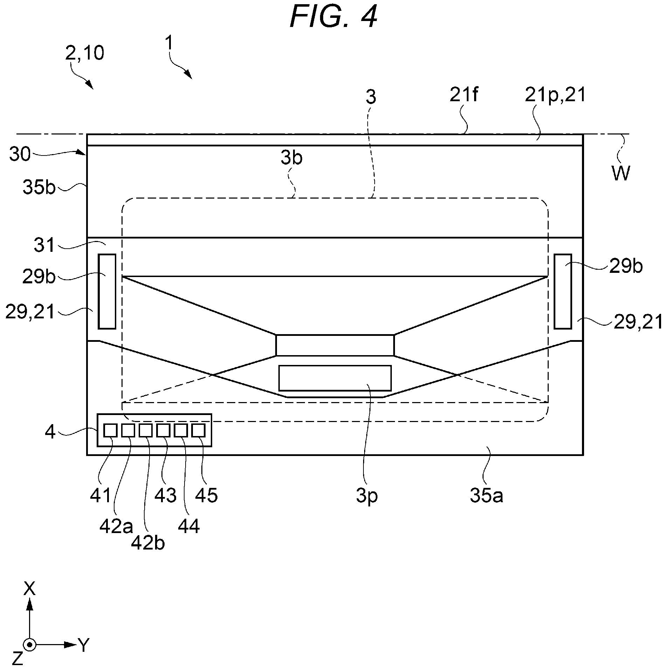

FIG. 1 is a front perspective view showing the schematic configuration and the installation mode of the projection system 1. FIG. 2 is a rear perspective view showing the schematic configuration and the installation mode of the projection system 1. FIG. 3 is a right side view showing the schematic configuration and the installation mode of the projection system 1. FIG. 4 is a top view showing the schematic configuration and the installation mode of the projection system 1. In FIGS. 3 and 4, a Web camera 5, a controller 6, and a correction unit 7 are omitted.

As shown in FIG. 1 and FIG. 2, the projection system 1 includes a projection cabinet 2 and a projector 3 mounted on the projection cabinet 2. The projection cabinet 2 can be referred to as a furniture.

The projection cabinet 2 includes a cabinet main body 10 and an operation panel 4. In the embodiment, the cabinet main body 10 is an example of a housing.

The cabinet main body 10 includes a lower assembly 20 and an upper assembly 30 and forms a box shape as a whole.

The projector 3 is housed between the lower assembly 20 and the upper assembly 30. More specifically, the projector 3 is installed on the upper surface of the lower assembly 20 and housed with the upside and four sides surrounded by the upper assembly 30. In the embodiment, the lower assembly 20 is an example of an installation portion.

An opening 31 is provided in the upper surface of the upper assembly 30. The opening 31 is an opening portion provided to pass a projection light Lp emitted from a projection light source unit 3p of the projector 3. In the embodiment, the opening 31 is an example of a first opening.

The projection cabinet 2 has casters 28 at four corners of the lower surface of the lower assembly 20. By unlocking the casters 28, a user can move the projection cabinet 2 to a desired location. For example, the user can move the projection cabinet 2 from a workroom to a conference room or from a conference room to another conference room.

The user installs the projection cabinet 2 in a predetermined projection position in the conference room. The projection cabinet 2 is installed with the back surface thereof facing a wall surface W.

Specifically, as shown in FIGS. 3 and 4, the user moves the projection cabinet 2 to bring an entire end surface 21f of a protrusion 21p of the lower assembly 20 into contact with the wall surface W.

The position where the entire end surface 21f of the protrusion 21p of the lower assembly 20 contacts the wall surface W is the predetermined projection position. In the embodiment, the position in which the protrusion 21p of the lower assembly 20 contacts the wall surface W is an example of a predetermined position in which the projector 3 displays a projection image P on the wall surface W as a projection surface. Note that the predetermined position can be referred to as a predetermined projection position. The protrusion 21p is an example of a protruding portion.

As shown in FIG. 1 and FIG. 2, after the projection cabinet 2 is installed on the predetermined projection position, the projector 3 is activated to project the projection light Lp from the projection light source unit 3p toward the wall surface W. In the embodiment, the wall surface W is an example of a projection surface. The projection surface is not limited to the wall surface W. The projection surface is not limited to a rigid flat surface, and may be a curtain formed of cloth or a sheet.

As shown in FIG. 2 and FIG. 4, the projection light source unit 3p is a part from which the projection light Lp generated inside the projector 3 is emitted to the outside of a casing of the projector 3. In other words, the projection light source unit 3p is an emission port from which the projector 3 emits the projection light Lp. The projection light source unit 3p is preferably covered by a light-transmissive plate of glass, synthetic resin, or the like, but may be an opening.

As shown in FIG. 1 and FIG. 2, when the projection light Lp is projected onto the wall surface W from the projection light source unit 3p of the projector 3, the projection image P is displayed on the wall surface W. In the embodiment, the projection light Lp is an example of a light.

A screen size S of the projection image P is, for example, 80 inches. The screen size S is not limited to 80 inches. For example, the size may be 100 inches or 120 inches. The projection image P has a rectangular shape. That is, the lengths of the diagonal lines of the projection image P are equal, and the midpoint of the diagonal line of the projection image P coincides with an image center Cp.

### 1.2. Sizes and Throw Ratios of Projection System

The projection system 1 is designed such that, when the projection system 1 is installed in the predetermined projection position, a positional relationship from a floor surface FL or the wall surface W becomes a predetermined size according to the screen size S of the projection image P. FIGS. 1 to 3 show definitions of the respective dimensions related to the predetermined size.

As shown in FIG. 3, a dimension Ph is a height from the floor surface FL on which the projection cabinet 2 is installed to the upper surface of the lower assembly 20 on which the projector 3 is installed. Specifically, the upper surface of the lower assembly 20 is an upper surface of a base 21. The upper surface of the lower assembly 20 or the upper surface of the base 21 are examples of an installation surface on which the projector 3 is installed.

A dimension Dh is a height from the floor surface FL on which the projection cabinet 2 is installed to a lower end of the projection image P.

A dimension Pd is a length from the end surface 21f of the protrusion 21p in contact with the wall surface W as the projection surface to a back surface 3b of the projector 3. In the embodiment, the back surface 3b of the projector 3 is an example of a projection surface-side surface of the projector 3.

A dimension Ch is a height from the floor surface FL to the upper surface of the upper assembly 30.

A dimension Yd indicates a projection distance, and is a length from the center of the projection light source unit 3p to the wall surface W as the projection surface.

As shown in FIGS. 1 and 2, a dimension Zw indicates a lateral length of the projection image P.

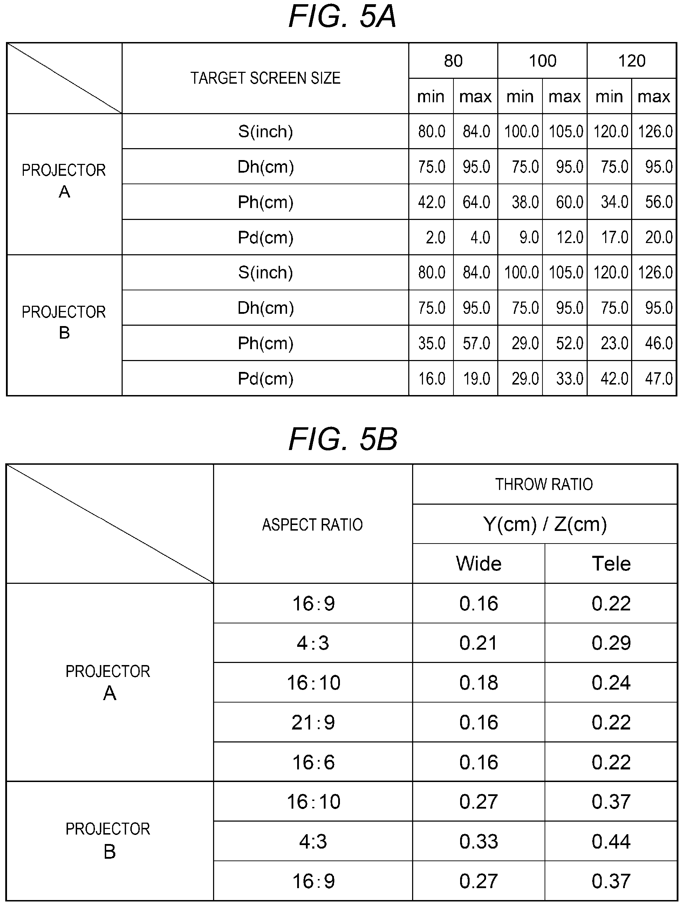

FIG. 5A is a table showing the screen sizes S and the dimensions Dh, Ph, Pd of the projection system 1. The numerical values shown in the table indicate preferable values of the respective dimensions for each screen size S of the projection image P for two types of projectors A and B having different specifications. The projector A and the projector B are examples of the projector 3.

The projector A and the projector B have different throw ratios. Specifically, the projector A is a short focus projector having a lower throw ratio than the projector B.

First, the screen sizes S and the dimensions Dh, Ph, Pd of the projector A will be described.

The screen size S indicates the size of the projection image P in inches.

In the projector A, when a target screen size is 100 inches, the minimum value of the projection image P is 100 inches and the maximum value is 105 inches. The target screen size indicates a desired screen size to be displayed on the projector A.

When the screen size S of the projection image P of the projector A is the minimum value of 100 inches, it is preferable to set the dimension Dh to 75.0 cm, the dimension Ph to 38.0 cm, and the dimension Pd to 9.0 cm. The values of the dimensions Dh, Ph, Pd are preferably set as described above. The values of the dimensions Dh, Ph, Pd are set as described above, and thereby, a high-quality rectangular projection image P with suppressed distortion and image quality degradation may be easily displayed on the wall surface W without fine adjustment.

The dimension Ch is set to a value between the dimension Dh and the dimension Ph, and preferably, as shown in FIG. 2, when the dimension Ch is set to the same value as a height of a table T of the conference room, the sense of unity with the table T can be enhanced.

From the table of FIG. 5A, when the screen size S of the projection image P of the projector A is 80 inches to 126 inches, it is preferable to set the dimension Dh from 75.0 cm to 95.0 cm, the dimension Ph from 34.0 cm to 64.0 cm, and the dimension Pd from 2.0 cm to 20.0 cm. When the projection system 1 has the above described specifications, a high-quality rectangular projection image P with suppressed distortion and image quality degradation may be easily displayed on the wall surface W without fine adjustment.

Next, the screen sizes S and the dimensions Dh, Ph, Pd of the projector B will be described.

When a target screen size of the projector B is 80 inches, the minimum value of the projection image P is 80 inches and the maximum value thereof is 84 inches.

When the screen size S of the projection image P of the projector B is the minimum value of 80 inches, it is preferable to set the dimension Dh to 75.0 cm, the dimension Ph to 35.0 cm, and the dimension Pd to 16.0 cm. The values of the dimensions Dh, Ph, Pd are set as described above, and thereby, a high-quality rectangular projection image P with suppressed distortion and image quality degradation may be easily displayed on the wall surface W without fine adjustment.

From the table of FIG. 5A, when the screen size S of the projection image P of the projector B is 80 inches to 126 inches, it is preferable to set the dimension Dh from 75.0 cm to 95.0 cm, the dimension Ph from 23.0 cm to 57.0 cm, and the dimension Pd from 16.0 cm to 47.0 cm. When the projection system 1 has the above described specifications, a high-quality rectangular projection image P with suppressed distortion and image quality degradation may be easily displayed on the wall surface W without fine adjustment.

FIG. 5B is a table showing throw ratios of the projector A and the projector B. The throw ratio is a value obtained by division of the dimension Yd by the dimension Zw. In the projector 3, the lower the throw ratio of a projection optical system, the shorter the projection distance when the projection image P is displayed on the wall surface W.

First, the throw ratio of the projector A will be described.

An aspect ratio indicates an aspect ratio of the projection image P. "Wide" indicates the throw ratio at the wide angle end of the projection optical system, and "Tele" indicates the throw ratio at the telephoto end of the projection optical system.

For example, when the aspect ratio is 16:9, the Wide throw ratio is 0.16, and the Tele throw ratio is 0.22.

From the table of FIG. 5B, the throw ratio of the projector A is from 0.16 to 0.29.

Next, the throw ratio of the projector B will be described.

For example, when the aspect ratio is 16:10, the Wide throw ratio is 0.27, and the Tele throw ratio is 0.37.

From the table of FIG. 5B, the throw ratio of the projector B is from 0.27 to 0.44.

### 2. PROJECTION CABINET

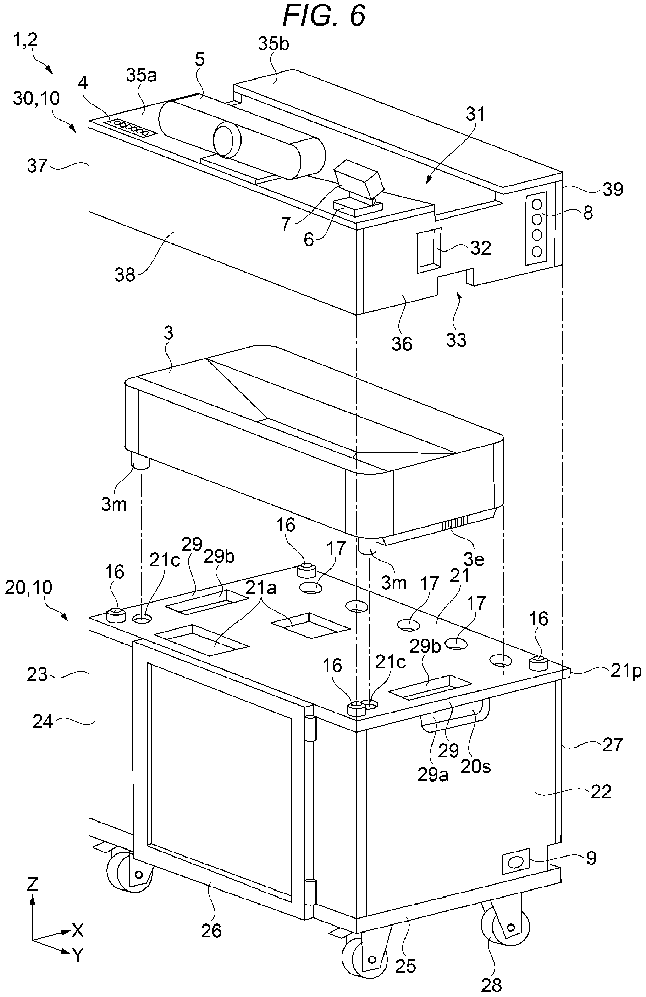

A configuration of the projection cabinet 2 will be described with reference to FIGS. 6 to 11.

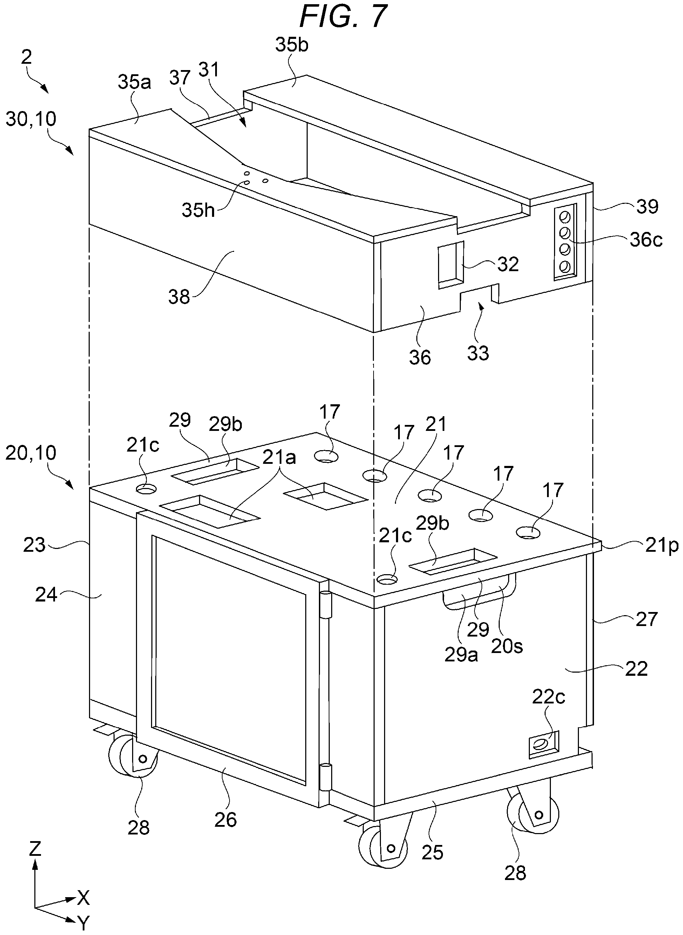

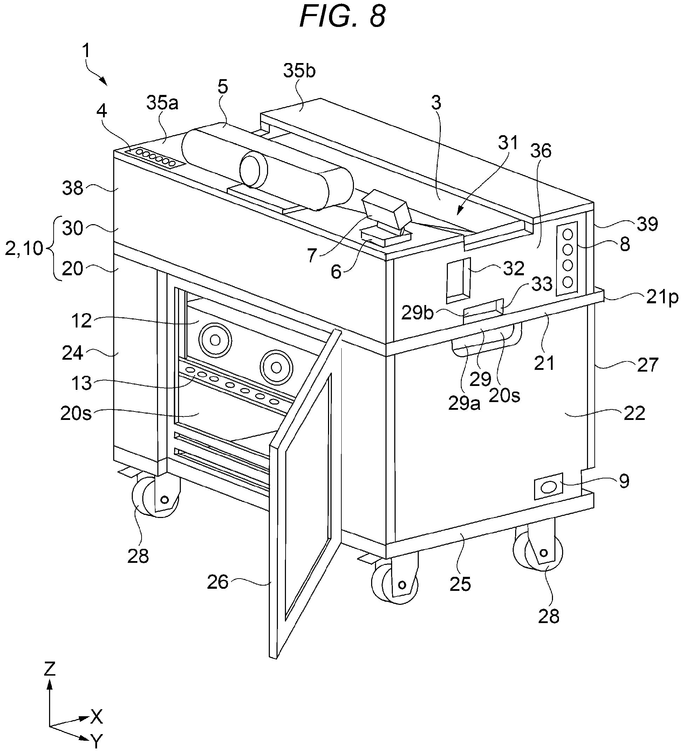

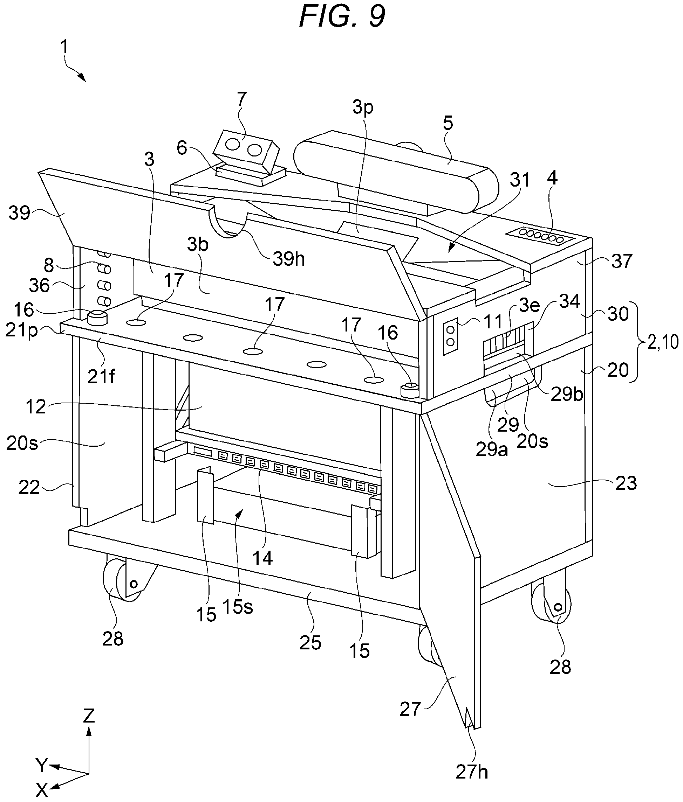

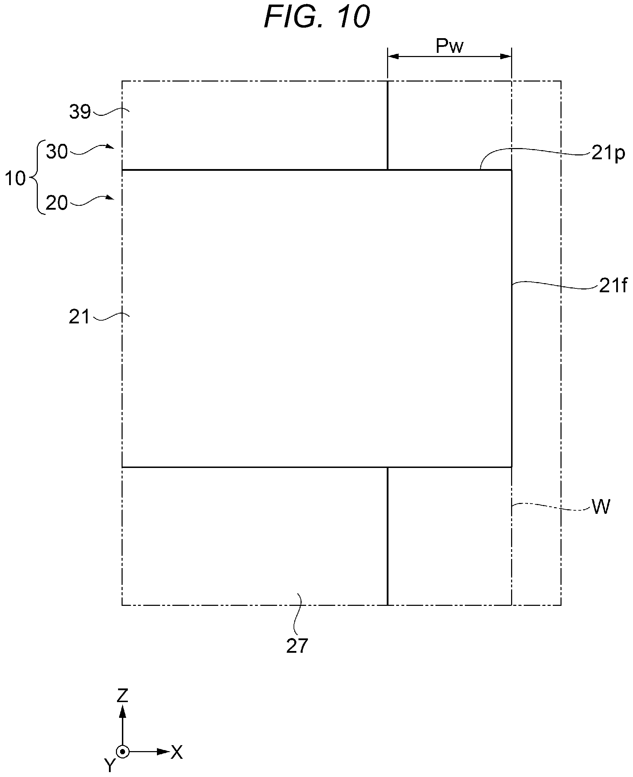

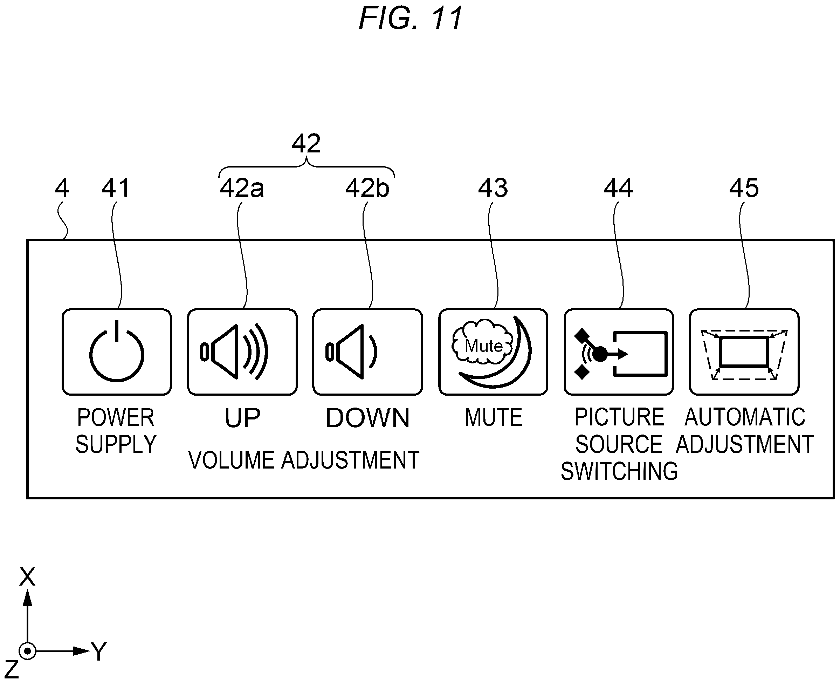

FIG. 6 is an exploded perspective view of the projection cabinet 2. FIG. 7 is an exploded perspective view of the cabinet main body 10. FIG. 8 is a front perspective view of the projection cabinet 2. FIG. 9 is a rear perspective view of the projection cabinet 2. FIG. 10 is an enlarged right side view of the protrusion 21p. FIG. 11 is a plan view of the operation panel 4.

As shown in FIG. 6, the projection cabinet 2 has the cabinet main body 10 and the operation panel 4.

As shown in FIG. 7, the cabinet main body 10 includes the lower assembly 20 and the upper assembly 30, and the lower assembly 20 and the upper assembly 30 are combined to be disassembled in consideration of maintenance.

Fixing members such as metal fittings are used for combining the lower assembly 20 and the upper assembly 30. The fixing members are provided in positions not externally visible so as not to impair the exterior appearance. The exterior appearance can be referred to as an aesthetic appearance.

### 2.1. Lower Assembly

As shown in FIGS. 6 and 7, the lower assembly 20 has a rectangular parallelepiped shape with six faces surrounded by the base 21, a right side board 22, a left side board 23, a front board 24, a front cover 26, a bottom board 25, and a back lower cover 27. The casters 28 are provided at four corners of the lower surface of the bottom board 25.

The two casters 28 on the front side are configured to be locked, and the two casters 28 on the rear side are not configured to be locked. As will be described later, since the projection cabinet 2 can be carried with handles 29, a configuration without the casters 28 may be employed.

As shown in FIGS. 8 and 9, a housing space 20s is provided inside the lower assembly 20. The housing space 20s can be accessed via the front cover 26 provided to be openable and closable on the front surface of the lower assembly 20, or the back lower cover 27 provided to be openable and closable on the back surface of the lower assembly 20.

As shown in FIG. 8, by opening the front cover 26, the user can access a speaker 12 and an internal picture IF (Interface) 13 housed in the housing space 20s from the front surface of the projection cabinet 2.

The internal picture IF 13 is a picture and/or audio port, and has a MIDI (Music Instrument Digital Interface) port, a USB (Universal Serial Bus) port, or the like. The internal picture IF 13 is coupled to an AV (Audio Visual) input port 8 provided in the upper assembly 30, and a picture signal and/or an audio signal are supplied from an external device via the AV input port 8.

The speaker 12 is an AV device that can output high-volume sound. In the embodiment, the speaker 12 is attached to a 19-inch rack shelf and installed in the housing space 20s.

The speaker 12 is housed when use in a situation requiring high-volume sound, e.g., use in a large conference room or an open space is assumed. Accordingly, when high-volume sound is unnecessary, the speaker 12 is not necessarily housed.

As shown in FIG. 9, by opening the back lower cover 27, the user can access an internal power strip 14 housed in the housing space 20s from the back surface of the projection cabinet 2. A cutout 27h provided in the back lower cover 27 can be used as a handle for opening the back lower cover 27.

Power cords for the projector 3, the speaker 12, a power supply port 11 provided in the upper assembly 30, the Web camera 5, etc. are coupled to the internal power strip 14, and AC (Alternating Current) power is supplied from an outlet (not shown) through an AC inlet 9 provided in the right side board 22.

The housing space 20s is provided with rack mount angles 15 for forming a 19-inch rack space 15s compliant with the EIA (Electron Industries Alliance) standard. The 19-inch rack space 15s stores a 19-inch device such as a conference system device and a battery.

### 2.1.1. Base

As shown in FIGS. 6 and 7, the base 21 is a top board of the lower assembly 20.

The projector 3 is installed on the upper surface of the base 21. In other words, the base 21 has an installation surface on which the projector 3 is installed.

The base 21 includes fixing portions 21c, through holes 21a, the protrusion 21p, the handles 29, cabling holes 17, and supporters 16.

### 2.1.1.1. Fixation of Projector

The fixing portions 21c are provided to fix the projector 3 to the upper surface of the base 21. The fixed portions 21c are provided, and thereby, displacement of the installation position of the projector 3 within the projection cabinet 2 due to the movement of the projection cabinet 2 or the like is suppressed.

The fixing portions 21c are provided in two positions corresponding to positions of legs 3m of the projector 3.

In the embodiment, the fixing portions 21c are concave portions. Ends of the legs 3m of the projector 3 are fitted in the concave portions, and thereby, the projector 3 is fixed. The fixing portions 21c are not limited to the concave portions. For example, through holes, L-shaped columnar members, angles, brackets, or the like may be used. The number of locations where the fixing portions 21c are disposed are not limited to two. The number of fixing portions 21c necessary for suppressing the displacement of the projector 3 may be provided in necessary positions.

### 2.1.1.2. Openings for Projector Air Intake

The through holes 21a are openings for air intake for the projector 3, and provided in positions corresponding to air intake ports of the projector 3 in the base 21.

According to the through holes 21a, the projector 3 may stably take in necessary and sufficient cooling air through the through holes 21a. In the embodiment, the through hole 21a is an example of a second opening.

In the embodiment, since the projector 3 has the air intake ports in two positions at the center and the front surface side of the bottom surface, the through holes 21a are provided in the two positions corresponding to the air intake ports. The through hole 21a provided in one position may include a plurality of through holes or slits formed by punching or slitting.

### 2.1.1.3. Protrusion

The protrusion 21p is a portion at the back surface side of the base 21 and protrudes to the most plus side in the X-axis direction in the cabinet main body 10.

As shown in FIG. 10, the protrusion 21p protrudes from the back lower cover 27 or a back surface of a back board 39 of the upper assembly 30 by a length Pw. In the embodiment, the length Pw is from 2 mm to 5 mm. The dimension of the length Pw is set from 2 mm to 5 mm, and thereby, the influence on the external appearance can be minimized.

The end surface 21f of the protrusion 21p forms a reference surface when the projector 3 is positioned in the predetermined projection position. In the embodiment, the end surface 21f is a continuous flat surface as shown in FIG. 4. The end surface 21f is not limited to the flat surface. The end surface 21f may have concavities and convexities as long as the end surface can form a reference surface.

In the projection cabinet 2 of the embodiment, the protrusion 21p used for positioning the projector 3 in the predetermined projection position is provided integrally with the base 21. The projector 3 is installed on the base 21. In other words, there is only one component, the base 21, provided between the wall surface W in contact with the protrusion 21p and the projector 3.

Accordingly, the likelihood of manufacturing variations and assembly errors may be reduced. Further, the likelihood of rattling with use or aging may be suppressed. Therefore, the reliability of positioning accuracy can be increased.

On the other hand, the cabinet described in JP-A-2022-59236 has a plurality of components including a lid, a bottom board on which the projector is installed, and four panels provided between the lid and the bottom board between the wall and the projector. Further, the lid used for positioning the cabinet includes three plate-like members. In other words, the lid includes three components. As described above, since the cabinet described in JP-A-2022-59236 has the plurality of components between the wall and the projector, manufacturing variations and assembly errors have more effect than those of the embodiment. Furthermore, the cabinet described in JP-A-2022-59236 has a higher likelihood of rattling occurs with use or aging than that of the embodiment.

### 2.1.1.4. Handles

As shown in FIGS. 6 and 7, the handles 29 are provided at both left and right sides of the base 21. The handles 29 are used to move the projection cabinet 2. For example, in a location where there is a step that does not allow the casters 28 to go over, the user can lift the projection cabinet 2 by holding the handles 29 with hands over the step.

The right handle 29 is a portion between a first hole 29a as a through hole provided in the right side board 22 and a second hole 29b as a through hole provided in the base 21. The left handle 29 is a portion between the first hole 29a as a through hole provided in the left side board 23 shown in FIG. 9 and the second hole 29b as a through hole provided in the base 21.

As shown in FIGS. 6 and 7, the first hole 29a and the second hole 29b communicate with each other via the housing space 20s of the lower assembly 20, and the user holds the handle 29 by inserting the hand from the first hole 29a into the second hole 29b.

### 2.1.1.5. Wiring Holes, Supporters, and Attachment Hole

The cabling holes 17 are holes for cabling. Five or six cabling holes 17 are arranged at the back surface 3b side of the projector 3. As described above, since the plurality of cabling holes 17 are provided at the back surface 3b side of the projector 3 of the base 21, cabling work is easier and beautiful cabling can be performed.

The supporters 16 are provided at four corners of the upper surface of the base 21 in positions in contact with the inside of the upper assembly 30. The supporters 16 are supporters that receive a load when the upper assembly 30 is pushed. Accordingly, the user can move the entire projection cabinet 2 including the lower assembly 20 without difficulty by pushing the upper assembly 30.

As shown in FIG. 7, the right side board 22 is provided with an attachment hole 22c. The AC inlet 9 is attached to the attachment hole 22c. The AC inlet 9 is a connector for coupling an AC cable.

### 2.2. Upper Assembly

As shown in FIG. 6, the upper assembly 30 has a rectangular parallelepiped shape with five faces except the lower surface surrounded by two top boards 35a and 35b, a right side board 36, a left side board 37, a front board 38, and the back board 39.

The upper assembly 30 is fixed to the upper surface of the base 21.

The operation panel 4, the Web camera 5, the controller 6, and the correction unit 7 are provided on an upper surface of the top board 35a. The AV input port 8 is provided on the right side surface of the right side board 36.

### 2.2.1. Opening for Projector Projection Light

The opening 31 is provided in the upper surface of the upper assembly 30. The opening 31 is an opening for the projection light Lp of the projector 3. As described above, the projection light Lp emitted from the projection light source unit 3p passes through the opening 31 and is displayed on the wall surface W as the projection surface. As shown in FIG. 4, the opening 31 exposes the projection light source unit 3p of the projector 3 in a plan view.

As shown in FIG. 7, the opening 31 is a gap portion between the top board 35a provided at the front surface side of the upper assembly 30 and the top board 35b provided at the back surface side.

### 2.2.2. Opening for Projector Air Exhaust

As shown in FIG. 8, a cutout 33 provided in the right side board 36 is an opening for air exhaust for the projector 3, and is provided in a position corresponding to an air exhaust port 3e in the right side surface of the projector 3. As shown in FIG. 9, a cutout 34 provided in the left side board 37 is an opening for air exhaust for the projector 3, and is provided in a position corresponding to the air exhaust port 3e in the left side surface of the projector 3.

The cutout 33 and the cutout 34 allow the projector 3 to easily eject the air exhausted from the projector 3 to the outside of the projection cabinet 2 through the cutout 33 and the cutout 34. In the embodiment, the cutout 33 and the cutout 34 are examples of a third opening. The cutout 33 and/or the cutout 34 may be through holes, or may be formed by a plurality of through holes or slits formed by punching or slitting.

### 2.2.3. Opening for Projector Focus Adjustment

As shown in FIG. 8, an opening 32 provided in the right side board 36 is an opening for adjusting a focus lever of the projector 3, and is provided in a position corresponding to the focus lever of the projector 3. The opening 32 is provided, and thereby, the user can easily access the focus lever of the projector 3 to adjust the focus of the projection image P. Therefore, according to the projection cabinet 2 of the embodiment, deterioration of operability of the projector 3 is suppressed.

### 2.2.4. Attachment Holes

As shown in FIG. 7, the upper assembly 30 has attachment holes 35h and 36c.

The attachment holes 35h are provided in the top board 35a. The Web camera 5 is fixed to the top board 35a using the attachment holes 35h. The Web camera is a video conference device equipped with a camera, a microphone, and a speaker.

The attachment hole 36c is provided in the right side board 36. The AV input port 8 is attached to the attachment hole 36c. The AV input port 8 includes an HDMI (registered trademark) (High Definition Multimedia Interface) connector and a USB (Universal Serial Bus) connector.

As shown in FIG. 9, the power supply port 11 is attached to the left side board 37. The power supply port 11 is attached using an attachment hole (not shown). The power supply port 11 is a port for USB power supply.

### 2.2.5. Opening for Maintenance

As shown in FIG. 9, the back board 39 is attached to the top board 35b to be openable and closable. The user can open the back board 39 using a cutout 39h of the back board 39.

The back board 39 is opened, and thereby, a large opening can be provided in the back surface of the upper assembly 30. The user can easily perform maintenance of the projector 3 and cabling work using the cabling holes 17 by using the opening.

### 2.3. Operation Panel

As shown in FIG. 11, the operation panel 4 includes operation buttons 41, 42a, 42b, 43, 44, 45 for controlling the projector 3 and/or the speaker 12. In the embodiment, the operation buttons 41, 42a, 42b, 43, 44, 45 are examples of an operator.

The operation buttons 41, 42a, 42b, 43, 44, 45 are operation buttons corresponding to five types of functions of power supply, volume adjustment, mute, picture source switching, and automatic adjustment.

In the embodiment, the above described five types of functions are selected from the viewpoint of use frequency.

The power supply includes a function of turning on and a function of turning off the power supply of the projector 3 and the speaker 12, and one operation button 41 is provided for the two functions. The operation button 41 is a power supply button.

The operation button 41 is clicked, and thereby, the power is turned on. Specifically, the projector 3 and the speaker 12 transition from a standby state to an activation state. The operation button 41 is long-pressed, and thereby, the power is turned off. Specifically, the projector 3 and the speaker 12 transition from the activation state to the standby state.

The volume adjustment includes a function of increasing the volume of the speaker 12 by one unit, a function of lowering the volume by one unit, a function of continuously increasing the volume, and a function of continuously lowering the volume, and two operation buttons 42 are provided for the four functions. The operation button 42a is a volume UP button, and the operation button 42b is a volume DOWN button.

The operation button 42a is clicked, and thereby, the volume of the projector 3 and the speaker 12 is increased by one unit. The operation button 42a is long-pressed, and thereby, the volume continuously increases. The operation button 42b is clicked, and thereby, the volume decreases by one unit. The operation button 42b is long-pressed, and thereby, the volume continuously decreases.

The mute includes a function of setting the projector 3 and the speaker 12 to a mute state and a function of releasing the mute state, and one operation button 43 is provided for the two functions. The operation button 43 is a mute button.

The operation button 43 is clicked, and thereby, mute is executed. The operation button 43 is clicked in the mute state, and thereby, the mute state is released.

The picture source switching is a function of switching a picture source of the projector 3, and one operation button 44 is provided for the function. The operation button 44 is a picture source switching button.

The operation button 44 is clicked, and thereby, the picture source is switched. Specifically, the content of the projection image P to be displayed is switched. Further, when there are a plurality of picture source input terminals in the projector 3, the picture source is cyclically switched at each time when the operation button 44 is clicked.

The automatic adjustment is a function of adjusting an angle of view of the projector 3 to a rectangular shape, and one operation button 45 is provided for the function. The operation button 45 is an automatic adjustment button.

The operation button 45 is clicked, and thereby, the adjustment of the angle of view is started, and when the adjustment of the angle of view is finished, the state returns to the activation state.

The operation panel 4 may be a touch panel. In this case, various icons for operation are displayed on a display screen as the operation buttons 41, 42a, 42b, 43, 44, 45. The user can execute an operation related to the above described five types of functions by tapping or long-pressing the icon.

The number of types of functions that can be operated on the operation panel 4 is preferably from one to five. The number of types of functions that can be operated on the operation panel 4 is set from one to five, and thereby, simple and intuitive operations can be performed.

When the number of types of functions that can be operated on the operation panel 4 is four or less, necessary functions may be selected from the above described five types of functions of power supply, volume adjustment, mute, picture source switching, and automatic adjustment. Or, another function than the above described five types of functions may be selected as a function that can be operated on the operation panel 4.

Although a plurality of functions are assigned to each of the operation buttons 41, 42a, 42b, 43, 44, 45, one type of functions can be operated by each of the operation buttons 41, 42a, 42b, 43, 44, 45. For example, two functions of the function of turning on and a function of turning off the power are assigned to the operation button 41, however, both are the functions related to power supply and the functions of one type.

As described above, one type of functions is assigned to each of the operation buttons 41, 42a, 42b, 43, 44, 45, and thereby, a simple configuration can be formed.

### 2.4. Controller

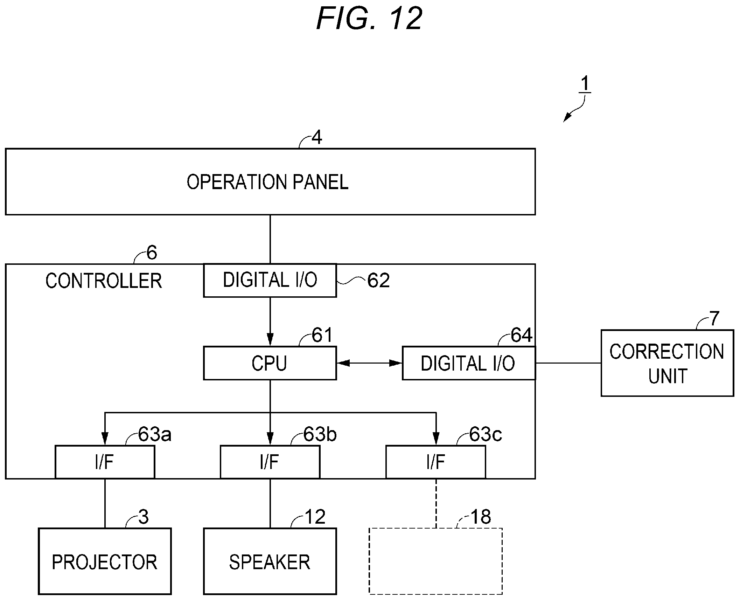

FIG. 12 is a block diagram showing a configuration of the controller 6. The controller 6 includes a CPU (central processing unit) 61, a digital I/O (input/output) port 62, a plurality of I/Fs (interfaces) 63a, 63b, 63c, and a digital I/O port 64.

The operation panel 4 is coupled to the digital I/O port 62 via a cable. The projector 3 is coupled to the I/F 63a, and the speaker 12 is coupled to the I/F 63b. Another device 18 may be coupled to the I/F 63c. The correction unit 7 is coupled to the digital I/O port 64.

The CPU 61 controls the projector 3 and/or the speaker 12 based on an operation signal from the operation panel 4. The correction unit 7 includes sensors such as an illuminance sensor, and the CPU 61 corrects projection luminance or the like of the projector 3 to an appropriate value based on a signal from the correction unit 7.

### 2.5. Example of Cabling

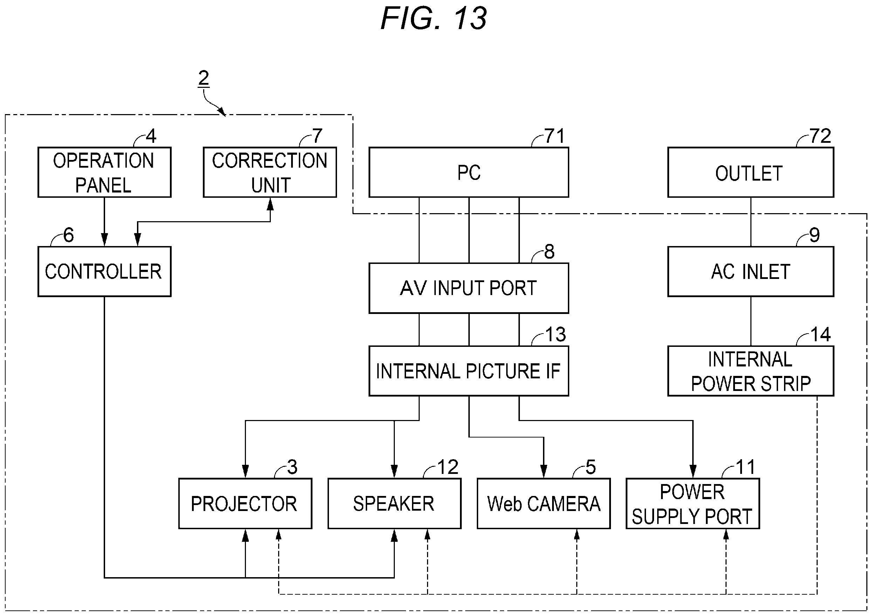

FIG. 13 shows an example of cabling of the projection cabinet 2.

In the projection cabinet 2 of the embodiment, in addition to the projector 3, the operation panel 4, the Web camera 5, the controller 6, the correction unit 7, the AV input port 8, the AC inlet 9, the power supply port 11, the speaker 12, the internal picture IF 13, and the internal power strip 14 are packaged in the cabinet main body 10.

The projection cabinet 2 is stored in a cabled state in advance as shown in FIG. 13 so as to be readily available.

### 2.6. Example of Use Case

Next, an example of a use case of the projection cabinet 2 will be described.

The user moves the projection cabinet 2 to the conference room and installs the projection cabinet 2 in the predetermined projection position. Here, the user can easily install the projection cabinet 2 in the predetermined projection position only by bringing the protrusion 21p of the projection cabinet 2 into contact with the wall surface W of the conference room.

The user couples a power cable to the AC inlet 9 of the projection cabinet 2 and couples the power cable to an outlet 72. Further, the user couples a PC 71 of the user to the AV input port 8.

The user clicks the operation button 41 of the operation panel 4 to activate the projector 3 and the speaker 12.

The user clicks the operation button 45 to adjust the angle of view of the projector 3.

The user adjusts the volume by operating the operation button 42a or the operation button 42b.

When the picture source is not a desired source, the user operates the operation button 44 to change the picture source to the desired source.

When the use of the projection cabinet 2 is finished, the user clicks the operation button 41 to turn off the power of the projector 3 and the speaker 12.

The user removes the power cable and the user's PC 71 from the projection cabinet 2, and puts away the projection cabinet 2.

As described above, the projection cabinet 2 of the embodiment includes the cabinet main body 10 as the housing housing the projector 3 that emits the projection light Lp as the projection image P to be projected onto the wall surface W as the projection surface and having the opening 31 as the first opening through which the projection light Lp passes, the lower assembly 20 as the installation portion disposed in the cabinet main body 10, in which the projector 3 is installed, and the protrusion 21p as the protruding portion disposed in the cabinet main body 10 and protruding toward the side of the wall surface W, wherein the protrusion 21p is brought into contact with the wall surface W, and thereby, the projector 3 is positioned in the predetermined position where the projection image P is displayed on the wall surface W.

Accordingly, in the projection cabinet 2 of the embodiment, the protrusion 21p is brought into contact with the wall surface W, and thereby, the projector 3 is positioned in the predetermined position where the projection image P is displayed on the wall surface W.

Therefore, the reliability of positioning accuracy can be increased.

Further, in the projection cabinet 2 of the embodiment, the lower assembly 20 as the installation portion has the base 21 on which the projector 3 is placed, and the protrusion 21p as the protruding portion is a part of the base 21. Note that the protruding portion taking the protrusion 21p as an example is not limited to a part of the base 21, but may be formed with resin, rubber, or the like provided at an end of a protrusion extending from the base 21. That is, the protruding portion may include a protrusion and resin, rubber, or the like.

As described above, the protrusion 21p is a part of the base 21. In other words, there is only one component, the base 21, provided between the wall surface W as the projection surface and the projector 3.

Accordingly, the likelihood of manufacturing variations and assembly errors may be reduced. Further, the likelihood of rattling with use or aging may be suppressed.

In the projection cabinet 2 of the embodiment, the base 21 has the through hole 21a as the second opening disposed in the position corresponding to the air intake port provided in the projector 3, and the cabinet main body 10 as the housing has the cutout 33 as the third opening disposed in the position corresponding to the air exhaust port 3e provided in the side surface crossing the bottom surface of the projector 3.

As described above, the projection cabinet 2 of the embodiment has the openings in the positions corresponding to the air intake and exhaust ports of the projector 3.

Accordingly, the projection cabinet 2 can maintain the air intake and exhaust of the housed projector 3 in good condition, and can stably operate the projector 3.

The projection cabinet 2 of the embodiment further includes the handle 29 including the first hole 29a provided in the cabinet main body 10 as the housing and the second hole 29b provided in the base 21 and communicating with the first hole 29a via the housing space 20s as the space within the cabinet main body 10.

As described above, the projection cabinet 2 has the handle 29 including the first hole 29a and the second hole 29b. Accordingly, the projection cabinet 2 can be easily transported.

In the projection cabinet 2 of the embodiment, the base 21 includes the fixing portion 21c that fixes the projector 3.

Accordingly, displacement of the installation position of the projector 3 due to transportation of the projection cabinet 2 or the like may be suppressed.

The projection cabinet 2 of the embodiment includes the operation panel 4 disposed in the cabinet main body 10 as the housing and having the operation buttons 41, 42a, 42b, 43, 44, 45 as the plurality of operators, and the number of types of functions operated by the plurality of operation buttons 41, 42a, 42b, 43, 44, 45 is from one to five.

Accordingly, the user can simply and intuitively operate the operation panel 4.

In the projection cabinet 2 of the embodiment, one type of functions is operated by each of the operation buttons 41, 42a, 42b, 43, 44, 45 as the plurality of operators.

As described above, one type of functions is assigned to each of the operation buttons 41, 42a, 42b, 43, 44, 45, and thereby, the operation panel 4 may be simply formed.

The projection system 1 of the embodiment is the projection system 1 including the projector 3 emitting the projection light Lp as the projection image P to be projected onto the wall surface W as the projection surface, and the projection cabinet 2 housing the projector 3, wherein the projection cabinet 2 includes the cabinet main body 10 as the housing having the opening 31 as the first opening through which the projection light Lp passes, the lower assembly 20 as the installation portion disposed in the cabinet main body 10, in which the projector 3 is installed, and the protrusion 21p as the protruding portion disposed in the cabinet main body 10 and protruding toward the side of the wall surface W, and the protrusion 21p is brought into contact with the wall surface W, and thereby, the projector 3 is positioned in the predetermined position where the projection image P is displayed on the wall surface W.

As described above, in the projection system 1 of the embodiment, the protrusion 21p is brought into contact with the wall surface W, and thereby, the projector 3 is positioned in the predetermined position where the projection image P is displayed on the wall surface W.

Therefore, the reliability of positioning accuracy can be increased.

In the projection system 1 of the embodiment, when the projector 3 is positioned in the predetermined position, the size of the projection image P on the wall surface W is from 80 inches to 126 inches, the throw ratio of the projection system 1 is from 0.16 to 0.29, the height from the floor surface FL on which the projection cabinet 2 is installed to the lower assembly 20 as the installation surface on which the projector 3 is installed or the upper surface of the base 21 is from 340 mm to 640 mm, the height from the floor surface FL to the lower end of the projection image P is from 750 mm to 950 mm, and the length from the end surface 21f of the protrusion 21p as the protruding portion in contact with the wall surface W to the back surface 3b as the surface of the projector 3 at the side of the wall surface W is from 20 to 200 mm.

As described above, when the size of the projection image P is from 80 inches to 126 inches and the throw ratio is from 0.16 to 0.29, the respective dimensions are set within the predetermined ranges, and thereby, the projection system 1 of the embodiment can easily display a high-quality rectangular projection image P with suppressed distortion and image quality degradation on the wall surface W without fine adjustment.

In the projection system 1 of the embodiment, when the projector 3 is positioned in the predetermined position, the size of the projection image P on the wall surface W is from 80 inches to 126 inches, the throw ratio of the projection system 1 is from 0.27 to 0.44, the height from the floor surface FL on which the projection cabinet 2 is installed to the lower assembly 20 as the installation surface on which the projector 3 is installed or the upper surface of the base 21 is from 230 mm to 570 mm, the height from the floor surface FL to the lower end of the projection image P is from 750 mm to 950 mm, and the length from the end surface 21f of the protrusion 21p as the protruding portion in contact with the wall surface W to the back surface 3b as the surface of the projector 3 at the side of the wall surface W is from 160 to 470 mm.

As described above, when the size of the projection image P is from 80 inches to 126 inches and the throw ratio is from 0.27 to 0.44, the respective dimensions are set within the predetermined ranges, and thereby, the projection system 1 of the embodiment can easily display a high-quality rectangular projection image P with suppressed distortion and image quality degradation on the wall surface W without fine adjustment.

Although the present disclosure has been described above based on preferred embodiments, the present disclosure is not limited to the above described embodiments. Further, the configurations of the respective parts of the present disclosure may be replaced by any configurations that exhibit the same functions as those of the above described embodiments, or any configurations may be added thereto.

### Summary of Present Disclosure

The summary of the present disclosure will be appended as below.

### Appendix 1

A projection cabinet includes a housing housing a projector that emits a light as a projection image to be projected onto a projection surface and having a first opening through which the light passes, an installation portion disposed in the housing, in which the projector is installed, and a protruding portion disposed in the housing and protruding toward a side of the projection surface, wherein the protruding portion is brought into contact with the projection surface, and thereby, the projector is positioned in a predetermined position where the projection image is displayed on the projection surface.

Thereby, the reliability of positioning accuracy can be increased.

### Appendix 2

In the projection cabinet according to Appendix 1, the installation portion includes a base on which the projector is mounted, and the protruding portion is a part of the base.

Thereby, the likelihood of manufacturing variations and assembly errors may be reduced. Further, the likelihood of rattling with use or aging may be suppressed.

### Appendix 3

In the projection cabinet according to Appendix 2, the base has a second opening disposed in a position corresponding to an air intake port provided in the projector, and the housing has a third opening disposed in a position corresponding to an air exhaust port provided in a side surface crossing a bottom surface of the projector.

Thereby, the air intake and exhaust of the housed projector can be maintained in good condition, and the projector can be stably operated.

### Appendix 4

The projection cabinet according to Appendix 2 or 3, further includes a handle including a first hole provided in the housing, and a second hole provided in the base and communicating with the first hole via a space within the housing.

Thereby, the projection cabinet can be easily transported.

### Appendix 5

In the projection cabinet according to any one of Appendices 2 and 3, the base includes a fixing portion that fixes the projector.

Thereby, displacement of the installation position of the projector due to transportation of the projection cabinet or the like may be suppressed.

### Appendix 6

The projection cabinet according to any one of Appendices 1 to 5, further includes an operation panel disposed in the housing and having a plurality of operators, wherein a number of types of functions operated by the plurality of operators is from one to five.

Thereby, a user can simply and intuitively operate the operation panel.

### Appendix 7

In the projection cabinet according to Appendix 6, one type of functions is operated by each of the plurality of operators.

Thereby, the operation panel can be simply formed.

### Appendix 8

A projection system includes a projector emitting a light as a projection image to be projected onto a projection surface, and a projection cabinet housing the projector, wherein the projection cabinet includes a housing having a first opening through which the light passes, an installation portion disposed in the housing, in which the projector is installed, and a protruding portion disposed in the housing and protruding toward a side of the projection surface, and the protruding portion is brought into contact with the projection surface, and thereby, the projector is positioned in a predetermined position where the projection image is displayed on the projection surface.

Thereby, the reliability of positioning accuracy can be increased.

### Appendix 9

In the projection system according to Appendix 8, when the projector is positioned in the predetermined position, a size of the projection image on the projection surface is from 80 inches to 126 inches, a throw ratio of the projection system is from 0.16 to 0.29, a height from a floor surface on which the projection cabinet is installed to an installation surface on which the projector is installed is from 340 mm to 640 mm, a height from the floor surface to a lower end of the projection image is from 750 mm to 950 mm, and a length from an end surface of the protruding portion in contact with the projection surface to a surface of the projector at the side of the projection surface is from 20 to 200 mm.

Thereby, a high-quality rectangular projection image with suppressed distortion and image quality degradation may be easily displayed on the projection surface without fine adjustment.

### Appendix 10

The projection system according to appendix 8, when the projector is positioned in the predetermined position, a size of the projection image on the projection surface is from 80 inches to 126 inches, a throw ratio of the projection system is from 0.27 to 0.44, a height from a floor surface on which the projection cabinet is installed to an installation surface on which the projector is installed is from 230 mm to 570 mm, a height from the floor surface to a lower end of the projection image is from 750 mm to 950 mm, and a length from an end surface of the protruding portion in contact with the projection surface to a surface of the projector at the side of the projection surface is from 160 to 470 mm.

Thereby, a high-quality rectangular projection image with suppressed distortion and image quality degradation may be easily displayed on the projection surface without fine adjustment.

## Claims

1. A projection cabinet comprising:
a housing housing a projector that emits a light as a projection image to be projected onto a projection surface and having a first opening through which the light passes;
an installation portion disposed in the housing, in which the projector is installed; and
a protruding portion disposed in the housing and protruding toward a side of the projection surface, wherein
the protruding portion is brought into contact with the projection surface, and thereby, the projector is positioned in a predetermined position where the projection image is displayed on the projection surface.

2. The projection cabinet according to claim 1, wherein
the installation portion includes a base on which the projector is mounted, and
the protruding portion is a part of the base.

3. The projection cabinet according to claim 2, wherein
the base has a second opening disposed in a position corresponding to an air intake port provided in the projector, and
the housing has a third opening disposed in a position corresponding to an air exhaust port provided in a side surface crossing a bottom surface of the projector.

4. The projection cabinet according to claim 2, further comprising a handle including a first hole provided in the housing, and a second hole provided in the base and communicating with the first hole via a space within the housing.

5. The projection cabinet according to claim 2, wherein
the base includes a fixing portion that fixes the projector.

6. The projection cabinet according to claim 1, further comprising an operation panel disposed in the housing and having a plurality of operators, wherein
a number of types of functions operated by the plurality of operators is from one to five.

7. The projection cabinet according to claim 6, wherein one type of functions is operated by each of the plurality of operators.

8. A projection system comprising:
a projector emitting a light as a projection image to be projected onto a projection surface; and
a projection cabinet housing the projector, wherein
the projection cabinet includes
a housing having a first opening through which the light passes,
an installation portion disposed in the housing, in which the projector is installed, and
a protruding portion disposed in the housing and protruding toward a side of the projection surface, and
the protruding portion is brought into contact with the projection surface, and thereby, the projector is positioned in a predetermined position where the projection image is displayed on the projection surface.

9. The projection system according to claim 8, wherein
when the projector is positioned in the predetermined position,
a size of the projection image on the projection surface is from 80 inches to 126 inches,
a throw ratio of the projection system is from 0.16 to 0.29,
a height from a floor surface on which the projection cabinet is installed to an installation surface on which the projector is installed is from 340 mm to 640 mm,
a height from the floor surface to a lower end of the projection image is from 750 mm to 950 mm, and
a length from an end surface of the protruding portion in contact with the projection surface to a surface of the projector at the side of the projection surface is from 20 to 200 mm.

10. The projection system according to claim 8, wherein
when the projector is positioned in the predetermined position,
a size of the projection image on the projection surface is from 80 inches to 126 inches,
a throw ratio of the projection system is from 0.27 to 0.44,
a height from a floor surface on which the projection cabinet is installed to an installation surface on which the projector is installed is from 230 mm to 570 mm,
a height from the floor surface to a lower end of the projection image is from 750 mm to 950 mm, and
a length from an end surface of the protruding portion in contact with the projection surface to a surface of the projector at the side of the projection surface is from 160 to 470 mm.
